# EUROPEAN PATENT APPLICATION

(11) **EP 2 958 009 A1**
(43) Date of publication of application: **23.12.2015**
(21) Application number: 15170416.0
(22) Date of filing: 03.06.2015
(51) Int. Cl.: G06F 3/12

(54) **PRINTER ROLL MANAGEMENT MECHANISM**

(30) Priority: 13.06.2014 US 201414304442
(71) Applicant: Ricoh Company, Ltd., Tokyo 143-8555 (JP)
(72) Inventor: GAERTNER, Joseph, Boulder, CO 80301-9270 (US); FRITZ, Erik, Boulder, CO 80301-9270 (US); KADIYALA, Kumar, Boulder, CO 80301-9270 (US); JONES, Lance, Boulder, CO 80301-9270 (US); STOICA, Marcel, Boulder, CO 80301-9270 (US)
(74) Representative: Schwabe - Sandmair - Marx

(57) **Abstract**

A method disclosed. The method includes receiving a plurality of jobs at a printing environment, collecting a first set of the plurality jobs at a first filter based on one or more job properties and generating a first batch of one or more jobs to be processed by selecting jobs within the first set of jobs having a volume within a defined volume range.

## Description

### BACKGROUND OF THE INVENTION

### 1. Field of the Invention

The invention relates to the field of computer systems, and in particular, to printing software products.

### 2. Description of the Related Art

Printers are common peripheral devices attached to computers. A printer allows a computer user to make a hard copy of documents that are created in a variety of applications and programs on a computer. To function properly, a channel of communication is established (e.g., via a network connection) between the printer and the computer to enable the printer to receive commands and information from the host computer. Once a connection is established between a workstation and the printer, printing software is implemented at a print server to manage a print job from order entry and management through the complete printing process.

The printing software often includes a graphical user interface (GUI) that enables users to control the printing process. In high-speed production printing environments, it would be advantageous to provide printing software that features visibility, automation and metrics for the efficient printing and finishing large amounts of orders in order to reduce wastes (e.g., time and paper waste). For instance, system operators often need to collect a group of jobs that either fills a roll of paper, or keeps the printer busy for some length of time (e.g., an 8-hour shift). Existing mechanisms require the operator to use manual calculations based on size of the jobs to determine which jobs should be in the group.

Accordingly, an automated roll management mechanism is desired.

### SUMMARY OF THE INVENTION

In one embodiment, a method includes receiving a plurality of jobs at a printing environment, collecting a first set of the plurality jobs at a first filter based on one or more job properties and generating a first batch of one or more jobs to be processed by selecting jobs within the first set of jobs having a volume within a defined volume range.

### BRIEF DESCRIPTION OF THE DRAWINGS

A better understanding of the present invention can be obtained from the following detailed description in conjunction with the following drawings, in which:
Figure 1 illustrates one embodiment of a data processing system network;
Figure 2 illustrates a screen shot of one embodiment of a graphical user interface;
Figure 3 is a flow diagram illustrating one embodiment for processing work orders;
Figures 4A - 4C illustrate screen shots of another embodiment of a graphical user interface
Figure 5 is a flow diagram illustrating one embodiment for generating a batch of print jobs; and
Figure 6 illustrates one embodiment of a computer system.

### DETAILED DESCRIPTION OF THE EMBODIMENTS

A printer roll management mechanism is described. In the following description, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form to avoid obscuring the underlying principles of the present invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

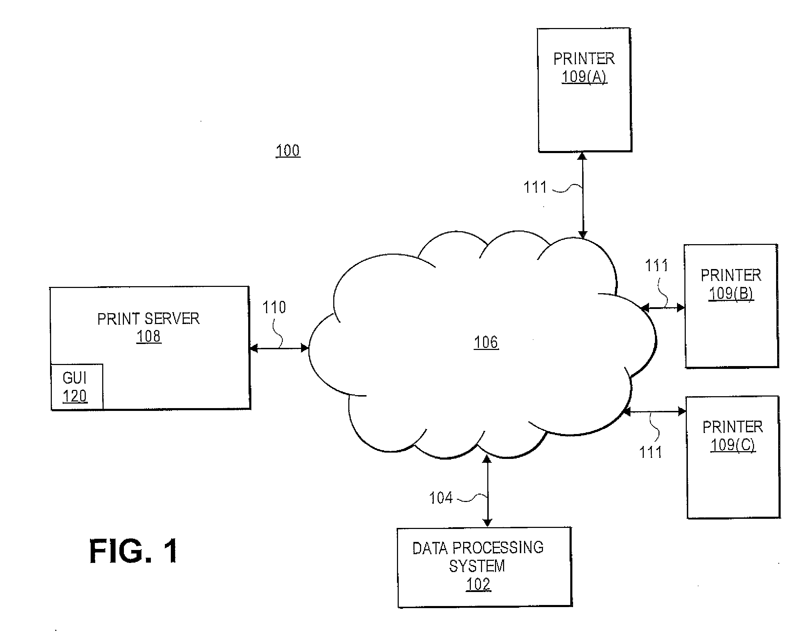

Figure 1 illustrates one embodiment of a data processing system network 100. Network 100 includes a data processing system 102, which may be either a desktop or a mobile data processing system, coupled via communications link 104 to network 106. In one embodiment, data processing system 102 is a conventional data processing system including a processor, local memory, nonvolatile storage, and input/output devices such as a keyboard, mouse, trackball, and the like, all in accordance with the known art. In one embodiment, data processing system 102 includes and employs the Windows operating system or a similar operating system and/or network drivers permitting data processing system 102 to communicate with network 106 for the purposes of employing resources within network 106.

Network 106 may be a local area network (LAN) or any other network over which print requests may be submitted to a remote printer or print server. Communications link 104 may be in the form of a network adapter, docking station, or the like, and supports communications between data processing system 102 and network 106 employing a network communications protocol such as Ethernet, the AS/400 Network, or the like.

According to one embodiment, network 106 includes print server 108 that serve print requests over network 106 received via communications link 110. Print server 108 subsequently transmits the print requests via communications link 110 to one of printers 109 for printing, which are coupled to network 106 via communications links 111. In one embodiment, an operator at data processing system 102 may interact with print server 108 using a GUI 120 to submit requests for service to one or more of printers 109 over network 106.

Although described as separate entities, other embodiments may include a print server 108 being incorporated in one or more of the printers 109. Therefore, the data processing system network depicted in Figure 1 is selected for the purposes of explaining and illustrating the present invention and is not intended to imply architectural limitations. Those skilled in the art will recognize that various additional components may be utilized in conjunction with the present invention.

According to one embodiment, print server 108 implements a printing software product that manages the processing (e.g., printing) of documents from data processing system 102 to one or more of printers 109. In other embodiments, the printing software manages printing of documents from multiple data processing systems 102 to printers 109.

According to one embodiment, the printing software product may be implemented using either TotalFlow Print Manager or TotalFlow Production Manager, although other types of printing software may be used instead. In a further embodiment, the print printing software product includes GUI 120 that enables a system administrator (or operator) to interact with the print printing software product at printer servers 108.

According to one embodiment, GUI 120 enables an operator to instantly view all jobs that meet specific job properties based on printing, finishing, paper and operator defined fields. In such an embodiment, a job may be defined as a unit of work (e.g., one or more files) to be processed at printer 109. In a further embodiment, GUI 120 includes filter and batch views that enable the operator to make decisions on volume metrics that are defined, and create filter scenarios for optimal efficiency. In such an embodiment, filters defined by an operator collect jobs with specific processing options in any order, while batches can be created (either manually or automatically) from these filters of jobs when a defined threshold or volume range is met.

In still a further embodiment, an operator may define a target sheet, feet or runtime value with a plus/minus (+/-) threshold for a batch of jobs. Subsequently, the print printing software product automatically calculates these values for the jobs in the batch and transmits the batch for printing when the target +/- the threshold is met.

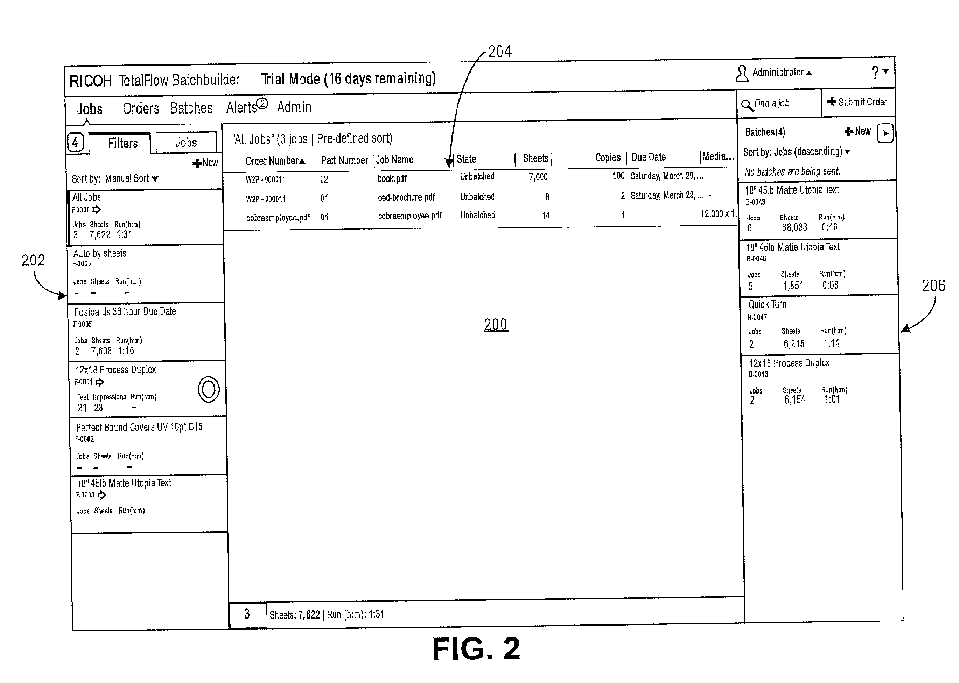

Figure 2 illustrates a screen shot of one embodiment of a GUI window 200. Window 200 enables an operator to view all jobs in matching filters, which enables generation of batches to be forwarded to one or more output devices (e.g., a printer, an imposition hot folder or directory on a network). Window 200 includes a filters area 202, a jobs grid 204 and batching panel 206.

According to one embodiment, filters area 202 provides a view of statistics (e.g., number of sheets, jobs, run time, etc.) of various operator defined filters. Filters area 202 simulates how jobs could be printed, finished or imposed together without altering files, thus providing the operator a choice or scenario of how to optimize the production process. Upon selection, jobs within a filter are displayed in jobs grid 204 along with various corresponding attributes (e.g., job name, sheets, copies, etc.). Based on filters shown in filter area 202, the operator may make decisions based on the results. For instance, the operator may automatically and/or manually batch work. Batched jobs are displayed in batching panel 206.

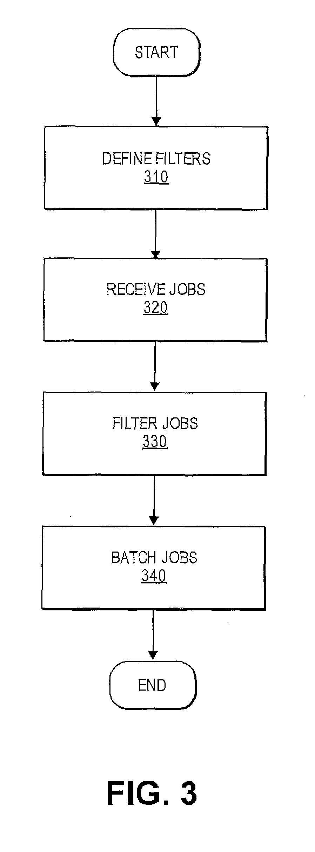

Figure 3 is a flow diagram illustrating one embodiment for processing work orders. At processing block 310, filters are defined. According to one embodiment, an operator can define a filter to match one or more job properties (e.g., media attributes, finishing attributes, lamination attributes, binding attributes, custom attributes, etc.). In such an embodiment, operators (e.g., =, !=, >, <, ≤,≥) may be used for matching.

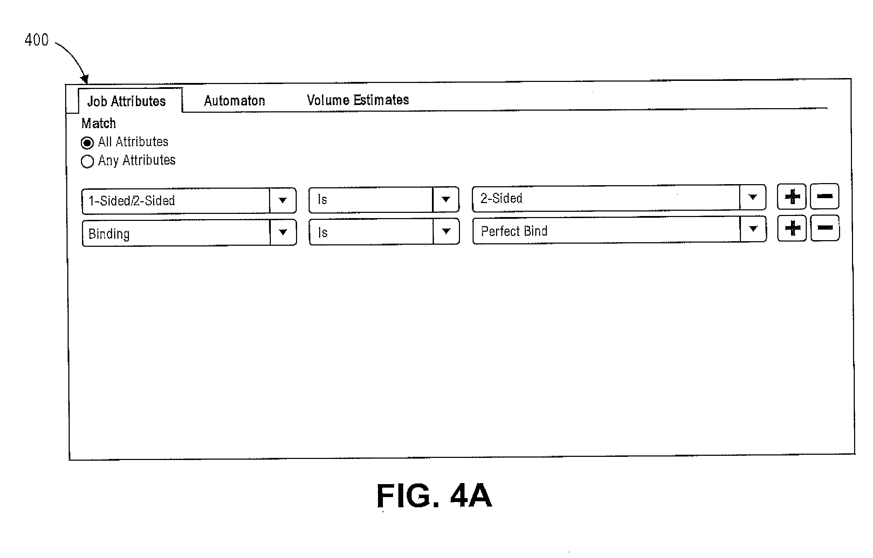

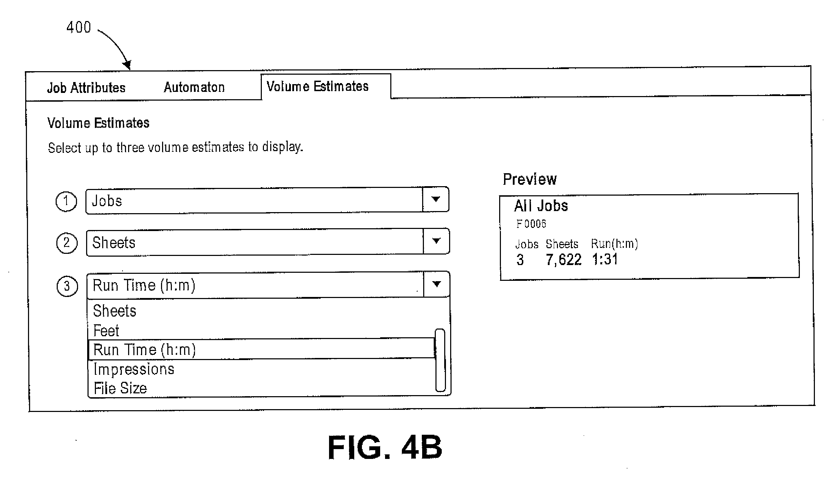

Figure 4A illustrates a screen shot of one embodiment of a GUI window 400 implemented to define a filter. Window 400 enables filters to be defined based on job attributes, as discussed above, by selecting a job attributes tab. In a further embodiment, operators may configure filters to display and automate using volume estimates, such as job run time, sheets, impressions, file size, etc., by selecting a volume estimates tab. Figure 4B illustrates a screen shot of such an embodiment of a GUI window 400.

Referring back to Figure 3, jobs are received after the filters have been defined, processing block 320. At processing block 330, jobs matching the defined filters are collected and displayed at filter area 202. At processing block 340, the jobs may be batched based on job properties. In one embodiment, print jobs are automatically batched upon a volume range being met. In such an embodiment, the range may indicate any volume exceeding a single quantity that would trigger automation.

According to one embodiment, the operator configures a batch that collects jobs that are to be processed for a specific output device. During batch configuration, the operator may use a configured speed (e.g., in sheets per hour (CS) or feet per hour (CF)) of the target output device. Alternatively, the operator may override the configured speed. In a further embodiment, the operator selects sheet, feet or run time as the trigger, as well as the target and threshold values.

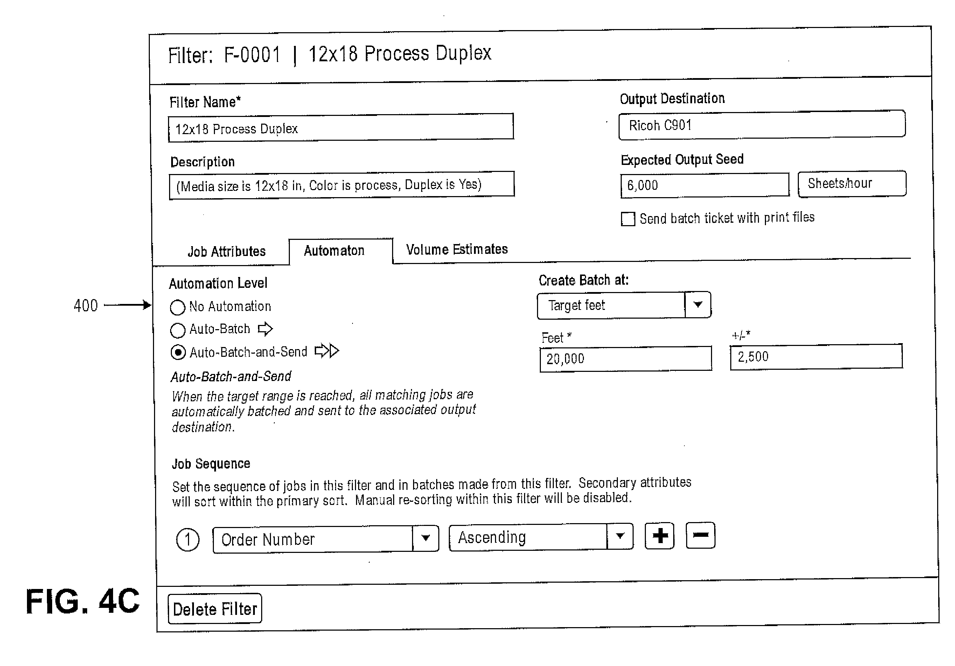

According to one embodiment, window 400 may be implemented to select secondary attributes and corresponding volume values. Figure 4C illustrates a screen shot of one embodiment of GUI window 400 implemented to generate a batch. As shown in Figure 4C, selection of an automation tab in window 400 enables batch generation of jobs in a filter and a box to enter a threshold.

Upon selection of the automation tab, automation level options are provided (e.g., No Automation, Auto-Batch, Auto-Batch-and-Send), along with attribute options (e.g., Target feet) for which to perform the batch along with an option to enter corresponding thresholds (Feet). Additionally, window 400 displays an output destination selection and the corresponding expected output speed for the output device, which may be overridden.

Upon selection of the Auto-Batch option, matching jobs are automatically batched upon reaching the entered threshold (plus/minus an entered amount). Upon selection of Auto-Batch-and-Send option, matching jobs are automatically batched and forwarded to a selected output destination upon reaching the entered threshold.

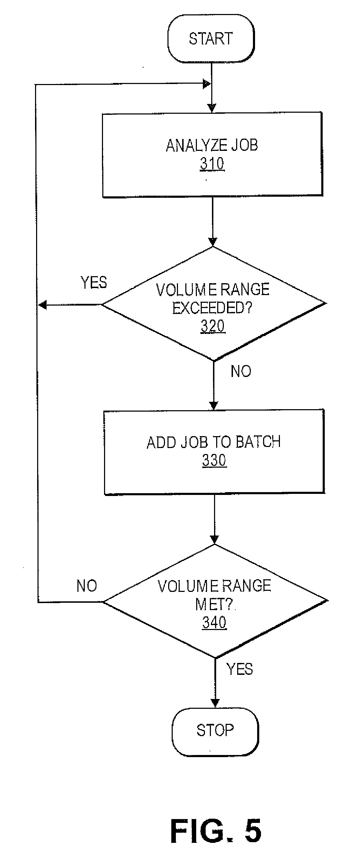

Figure 5 is a flow diagram illustrating one embodiment for automatically generating a batch of jobs. At processing block 510, a filtered job that matches defined batch properties is analyzed to calculate volume values. In one embodiment, a sheets/run time or feet/run time value for each job in the filter is calculated based on the pages in the job and the media size.

At decision block 520, a determination is made as to whether the addition of the job to the batch would cause the batch to exceed the maximum defined volume range. If so, the job is discarded at processing block 530. Subsequently, control is returned to processing block 510 where another job is selected for analysis.

If the volume range is not exceed the job is added to the batch, processing block 540. At processing block 550, the job is added to the batch. At processing block 560, the batch volume values are updated. At decision block 560, a determination is made as to whether the batch volume is within the defined range. If not, control is returned to processing block 510 where another job is selected for analysis. Otherwise the batch is competed.

As shown above, the printing software product implements a pick and choose algorithm to determine if any combination of jobs is within the target +/- threshold. If a combination is found, the batch of jobs is automatically forwarded to the output device.

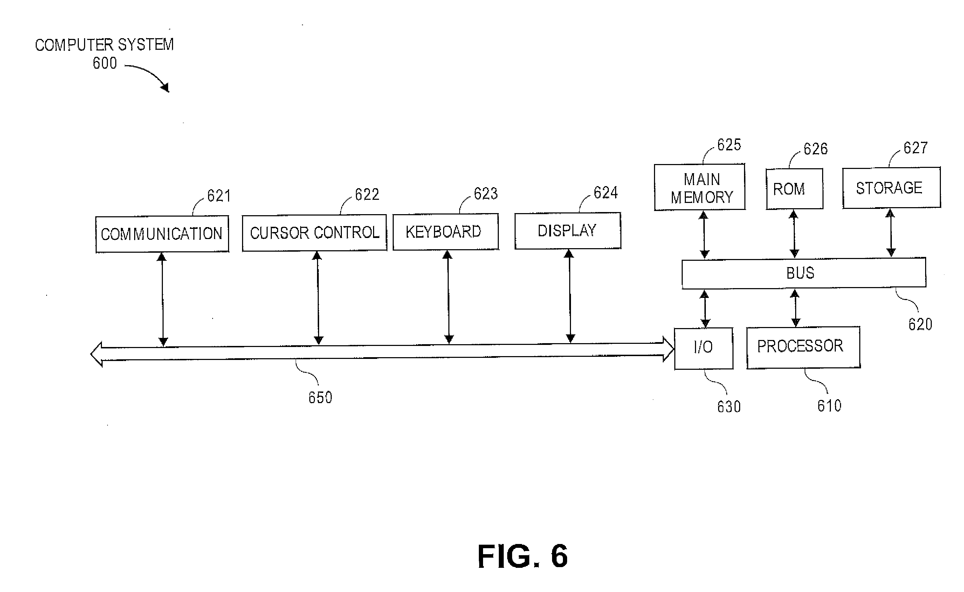

Figure 6 illustrates a computer system 600 on which data processing system 102 and/or servers 108 may be implemented. Computer system 600 includes a system bus 620 for communicating information, and a processor 610 coupled to bus 620 for processing information.

Computer system 600 further comprises a random access memory (RAM) or other dynamic storage device 625 (referred to herein as main memory), coupled to bus 620 for storing information and instructions to be executed by processor 610. Main memory 625 also may be used for storing temporary variables or other intermediate information during execution of instructions by processor 610. Computer system 600 also may include a read only memory (ROM) and or other static storage device 626 coupled to bus 620 for storing static information and instructions used by processor 510.

A data storage device 625 such as a magnetic disk or optical disc and its corresponding drive may also be coupled to computer system 600 for storing information and instructions. Computer system 600 can also be coupled to a second I/O bus 650 via an I/O interface 630. A plurality of I/O devices may be coupled to I/O bus 650, including a display device 624, an input device (e.g., an alphanumeric input device 623 and or a cursor control device 622). The communication device 621 is for accessing other computers (servers or clients). The communication device 621 may comprise a modem, a network interface card, or other well-known interface device, such as those used for coupling to Ethernet, token ring, or other types of networks.

Embodiments of the invention may include various steps as set forth above. The steps may be embodied in machine-executable instructions. The instructions can be used to cause a general-purpose or special-purpose processor to perform certain steps. Alternatively, these steps may be performed by specific hardware components that contain hardwired logic for performing the steps, or by any combination of programmed computer products, components and/or custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims, which in themselves recite only those features regarded as essential to the invention.

The present application is based on and claims the benefit of priority of U.S. Patent Application No. 14/304,442 filed on June 13, 2014, the entire contents of which are hereby incorporated herein by reference.

## Claims

1. A computer generated method comprising:
receiving a plurality of jobs at a printing environment;
collecting a first set of the plurality jobs at a first filter based on one or more job properties; and
generating a first batch of one or more jobs to be processed by selecting jobs within the first set of jobs having a volume within a defined volume range.

2. The method of claim 1 wherein generating the first batch comprises:
analyzing a first job in the first set of jobs to calculate volume values;
determining whether addition of the first job to the batch would cause the batch to exceed the defined volume range; and
adding the first job to the batch upon a determination that the addition of the first job to the batch would not cause the batch to exceed the defined volume range.

3. The method of claim 2 including data that, when accessed by a machine, cause the machine to perform further operations comprising updating batch volume values after adding the first job to the batch.

4. The method of claim 3 including data that, when accessed by a machine, cause the machine to perform further operations comprising:
determining whether the batch volume values are within the defined volume range; and
analyzing a second job in the first set of jobs to calculate volume values if the batch volume is not within the defined volume range.

5. The method of claim 4 including data that, when accessed by a machine, cause the machine to perform further operations comprising transmitting the batch to an output device for processing upon a determination that the batch volume values are within the defined volume range.

6. The method of claim 2 including data that, when accessed by a machine, cause the machine to perform further operations comprising discarding the first job upon a determination that the addition of the first job to the batch would cause the batch to exceed the defined volume range.

7. The method of claim 2 wherein calculation of the volume values for the first job is based on the pages in the job and the media size.

8. The method of claim 2 including data that, when accessed by a machine, cause the machine to perform further operations comprising defining the first batch, via a graphical user interface (GUI), by selecting one or more secondary job properties.

9. The method of claim 8 wherein selecting the one or more job properties comprises:
selecting a target value; and
selecting a plus/minus threshold.

10. The method of claim 9 wherein selecting the one or more job properties further comprises selecting an output speed for an output device.

11. A print server, comprising:
a processor; and
a printing software product including a graphical user interface (GUI) to be executed by the processor to receive a plurality of jobs at a printing environment, collect a first set of the plurality jobs at a first filter based on one or more job properties and generate a first batch of one or more jobs to be processed by selecting jobs within the first set of jobs having a volume within a defined volume range.

12. The print server of claim 11 wherein generating the first batch comprises analyzing a first job in the first set of jobs to calculate volume values, determining whether addition of the first job to the batch would cause the batch to exceed the defined volume range and adding the first job to the batch upon a determination that the addition of the first job to the batch would not cause the batch to exceed the defined volume range.

13. The print server of claim 12 wherein generating the first batch further comprises updating batch volume values after adding the first job to the batch.

14. The print server of claim 12 wherein generating the first batch further comprises discarding the first job upon a determination that the addition of the first job to the batch would cause the batch to exceed the defined volume range.

15. The print server of claim 12 wherein calculation of the volume values for the first job is based on the pages in the job and the media size.
